# EUROPÄISCHE PATENTSCHRIFT

(11) **EP 3 593 433 B1**
(45) Veröffentlichungstag und Bekanntmachung des Hinweises auf die Patenterteilung: **14.10.2026**
(21) Anmeldenummer: 18709564.1
(22) Anmeldetag: 07.03.2018
(51) Int. Cl.: B60L 58/15, B60L 58/22, H02J 1/102, H02J 7/52, H02J 7/56, H02J 7/82

(54) **UNTERSEEBOOT UND VERFAHREN ZUM BETREIBEN EINES ANTRIEBSSYSTEMS EINES UNTERSEEBOOTES**
SUBMARINE AND METHOD FOR OPERATING A DRIVE SYSTEM OF A SUBMARINE
SOUS-MARIN ET PROCÉDÉ POUR FAIRE FONCTIONNER UN SYSTÈME DE PROPULSION D'UN SOUS-MARIN

(30) Priorität: 08.03.2017 DE 102017002113
(43) Veröffentlichungstag der Anmeldung: 15.01.2020
(73) Patentinhaber: TKMS GmbH, 24143 Kiel (DE); thyssenkrupp AG, 45143 Essen (DE)
(72) Erfinder: JANKE, Alexander, 24145 Kiel (DE); DANNENBERG, Norbert, 24220 Böhnhusen (DE)
(74) Vertreter: thyssenkrupp Intellectual Property GmbH
(86) Internationale Anmeldenummer: PCT/EP2018/055596
(87) Internationale Veröffentlichungsnummer: WO 2018/162552

(56) Entgegenhaltungen:
- EP-A1- 2 357 714
- DE-A1- 102014 114 792
- US-A1- 2016 226 268

## Beschreibung

Die Erfindung betrifft ein Verfahren zum Betreiben eines Antriebssystems eines Unterseebootes gemäß dem Oberbegriff des Anspruchs 1. Des Weiteren betrifft die Erfindung ein Unterseeboot mit mindestens einem Verbraucher gemäß dem Oberbegriff des Anspruchs 13.

Unterseeboote weisen zur Versorgung von elektrischen Verbrauchern wie beispielsweise dem Fahrantrieb, der Klimatisierungsanlage oder der Kommunikationseinrichtung mindestens ein elektrisches Fahrnetz bzw. mindestens ein Gleichspannungsnetz auf. Gespeist wird dieses Fahrnetz mit elektrischer Energie durch ein Verbrennungsaggregat, Batterien und/oder durch Brennstoffzellen. Während eines Aufenthaltes des Unterseebootes in einem Hafen kann das Fahrnetz außerdem über ein externes elektrisches Netz mit Energie versorgt werden.

Da Unterseeboote auch während der Unterwasserfahrt mit ausreichend elektrischer Energie versorgt werden müssen, ist es für den Betrieb des Unterseebootes wesentlich, dass das Antriebssystem auch unabhängig von dem Verbrennungsaggregat oder externen Energiequellen betreibbar ist. Dazu ist dem mindestens einem Fahrnetz eine Vielzahl parallel geschalteter Batteriestränge zugeordnet, die dem Fahrnetz als Energiespeicher dienen. Die Batteriestränge bestehen jeweils aus einer Vielzahl von in Reihe geschalteter Batteriezellen bzw. Batteriemodulen. Bei bekannten Antriebssystemen von Unterseebooten weisen die Fahrnetze bis zu sechzig Batteriestränge auf, die auf ein oder mehrere Fahrnetze verteilt sein können. In diesem Zusammenhang ist die DE 10 2015 216 097 A1 zu nennen.

In aller Regel werden die Batteriestränge während der Überwasserfahrt durch das Verbrennungsaggregat aufgeladen und während der Unterwasserfahrt entladen, indem sie den elektrischen Verbrauchern als Energiequelle dienen. Ein Aufladen der Batteriestränge während der Unterwasserfahrt ist durch die Brennstoffzellen möglich oder durch Rückgewinnung der Energie durch die kinetische Energie des Antriebs.

Die Parallelschaltung von Batterien ist keineswegs unproblematisch, da aufgrund unterschiedlicher Batterieeigenschaften bzw. Ladezustände Ausgleichsströme zwischen den einzelnen Batteriesträngen fließen. Deswegen werden parallele Batteriestränge über DC-DC-Steller bzw. Gleichstromumrichter voneinander entkoppelt. Allerdings führt auch eine derartige Entkopplung paralleler Batteriestränge über DC-DC-Steller zu einer Belastung der einzelnen Batteriestränge, da das Entladen und das Aufladen unabhängig davon erfolgt, wie hoch die "Rest-Kapazitäten" bzw. der Ladezustand (SOC, State Of Charge) der einzelnen Stränge ist. Ein Entladen oder Aufladen ohne Berücksichtigung des SOC kann zu einer Tiefenentladung oder Überladung und somit zu einer irreversiblen Schädigung der Batterien oder sogar zur Explosion selbiger führen. In diesem Zusammenhang ist die DE 10 2014 109 092 A1 zu nennen. Zudem sind zum Stand der Technik noch die Dokumente DE 10 2014 114 792 A1 und EP 2 357 714 A1 zu nennen.

Aus der US 2016 / 0 226 268 A1 ist ein Batteriesystem und ein Energiespeichersystem mit einem solchen Batteriesystem bekannt.

Um dies zu vermeiden, müssten sämtliche an dem Lade- und Entladevorgang beteiligten Batteriestränge über eine untereinander abgestimmte Regelung bzw. Kommunikationseinrichtung miteinander koordiniert werden. Dies birgt jedoch den Nachteil in sich, dass ein erhöhter Kommunikations- und Regelungsaufwand zwischen den einzelnen Strängen notwendig ist, um bei einem Ausfall dieser notwendigen Regelungs- oder Kommunikationseinrichtungen wiederrum ein gleichmäßiges Entladen der Batteriestränge gewährleisten zu können. Insbesondere bei hohen Zyklenzahlen, d. h. bei häufigem Auf- und Entladen der Batterien, kann ein ungleichmäßiges Auf- und Entladen wiederrum zur Überladung und Tiefenentladung der einzelnen Stränge führen. Diese Schäden resultieren in einer verkürzten Lebenszeit der Batterien, was insbesondere für den Betrieb von Unterseebooten zu gravierenden Konsequenzen führen könnte.

Ein ungleichmäßiges, d. h. nicht synchronisiertes, Entladen und Laden der einzelnen Batteriestränge führt außerdem dazu, dass stets nur ein Bruchteil der maximalen Batteriekapazitäten dem Fahrnetz zur Versorgung der Verbraucher, insbesondere des Antriebs, zur Verfügung gestellt werde kann. Durch das nicht synchronisierte Entladen und Aufladen der Batteriestränge unterscheiden sich die SOC der Batteriestränge, sodass die zur Verfügung stehende elektrische Energie eines jeden Batteriestranges unterschiedlich ist. Davon abgesehen, dass dieser Zustand ein Mehraufwand bzgl. der Regelung der Energieversorgung der Verbraucher bedeutet, resultiert dieser Zustand auch in eine gewisse Unsicherheit bzgl. der Versorgung des Fahrantriebs mit elektrischer Energie.

Der Erfindung liegt nun die Aufgabe zugrunde, ein Verfahren zum Betreiben eines Antriebssystems eines Unterseebootes sowie ein Unterseeboot zu schaffen, mit dem ein Entladen und Aufladen der einzelnen Batteriestränge auf eine gleichmäßige Art und Weise ermöglicht wird.

Ein Verfahren zur Lösung dieser Aufgabe weist die Maßnahmen des Anspruchs 1 auf. Demnach ist es vorgesehen, dass die für den Betrieb des mindestens einen Verbrauchers notwendige elektrische Energie in Abhängigkeit der Ladezustände (SOC) der mindestens zwei Batteriestränge von den Batteriesträngen vom Verbraucher bezogen wird, um die SOC der Batteriestränge miteinander zu synchronisieren. Somit zieht der Verbraucher seine elektrische Energie bzw. die erforderliche elektrische Leistung von genau den Batteriesträngen, die in Summe geradeeben diese erforderliche Energie bzw. Leistung zur Verfügung stellen können, ohne eine Tiefenentladung zu erfahren. Durch diese bedarfsabhängige Energie- bzw. Leistungsabnahme des Verbrauchers von den Batteriesträngen, werden gerade die Batteriestränge zur Versorgung des Verbrauchers mit elektrischer Energie herangezogen, deren SOC in einen für den Betrieb der Batteriestränge günstigen Bereich liegt. Währenddessen werden Batteriestränge mit einem ungünstigen, d. h. geringen SOC-Wert wenigstens zunächst nicht für die Versorgung des Verbrauchers herangezogen. Durch diese vom SOC der Batteriestränge abhängige Energieaufnahme des Verbrauchers werden mit der Zeit die SOC aller Batteriestränge aneinander angeglichen.

Das Laden erfolgt gleichermaßen wie das Entladen und ist im Vergleich zum Laden lediglich durch eine Vorzeichenumkehr der Strangströme gekennzeichnet. Hier werden zum Synchronisieren die Batteriestränge mit elektrischer Energie geladen, deren SOC in einen für den Betrieb der Batteriestränge ungünstigen Bereich liegen. Währenddessen werden Batteriestränge mit einem günstigeren, d. h. höheren SOC-Wert wenigstens zunächst für die Versorgung des Verbrauchers mit elektroscher Energie herangezogen.

Durch dieses Angleichen der SOC aller Batteriestränge des Fahrnetzes können die Stränge auf eine besonders gleichmäßige Art und Weise entladen und geladen werden, was sich positiv auf die Lebensdauer der einzelnen Batteriezellen auswirkt.

Darüber hinaus steht dem Verbraucher, insbesondere dem Fahrantrieb des Unterseebootes, potenziell eine größere Menge an elektrischer Energie bzw. Leistung zur Verfügung. Durch dieses Verfahren kann insbesondere verhindert werden, dass starke Verbraucher elektrische Energie von einem Batteriestrang beziehen, der bereits einen äußerst geringen SOC aufweist und somit bei einer weiteren Energieentnahme irreversibel geschädigt werden könnte. Durch das hier beschriebene Verfahren wird die elektrische Energie bzw. die Leistung von dem Verbraucher vielmehr von den Batteriesträngen bezogen, deren SOC bzw. Energiekapazität in der Summe ausreicht, um den Anforderungen des Verbrauchers gerecht zu werden.

Es ist vorgesehen, dass von einer Regeleinrichtung eines Batteriestranges eine Ul-Kennlinie für jeden Batteriestrang in Abhängigkeit vom SOC des jeweiligen Batteriestranges vorgegeben wird. Durch diese Vorgabe der Ul-Kennlinien in Abhängigkeit von dem SOC für die Batteriestränge ergibt sich, welche elektrische Energie bzw. Leistung von welchem Batteriestrang in das Fahrnetz zur Versorgung des Verbrauchers gespeist werden kann. Dabei kann es vorgesehen sein, dass die Ul-Kennlinien durch die Regeleinrichtungen der Batteriestränge derart festgelegt werden, dass die Strangspannungen der an der Energieversorgung beteiligten Batteriestränge wenigstens in einem ähnlichen Bereich liegen.

Im Allgemeinen ist es vorgesehen, dass die Strangspannungen der Batteriestränge annähernd mit der Fahrnetzspannung identisch sind. Aufgrund der elektrischen Konfiguration des Fahrnetzes ist es jedoch möglich, dass die Fahrnetzspannung lokal unterschiedlich ist. Durch die Vorgabe der Ul-Kennlinien durch die Regeleinrichtung eines jeden Batteriestranges wird es möglich, festzulegen, welche Batteriestränge stärker belastet werden und welche schwächer belastet werden, um den Verbraucher mit elektrischer Energie zu versorgen.

Bevorzugt kann es außerdem vorgesehen sein, dass von einem Batteriestrang mit einem höheren SOC mehr elektrische Energie bezogen wird, als von einem Batteriestrang mit einem geringeren SOC, wobei die Strangspannungen der einzelnen Batteriestränge vorzugsweise auf einem ähnlichen bzw. auf einem gleichen Spannungsniveau gehalten werden. Insbesondere durch die Regelung der Strangspannungen auf einem ähnlichen Wert kann der Verbraucher besonders zuverlässig und stabil betrieben werden. Ein Nachregeln der Strangspannungen ist somit kaum noch erforderlich. Dies wirkt sich sowohl positiv auf den Betrieb des Antriebssystems als auch auf die Komplexität des Steuersystems aus.

Ein weiteres vorteilhaftes Ausführungsbeispiel der vorliegenden Erfindung kann es vorsehen, dass von Batteriesträngen mit unterschiedlichem SOC, vorzugsweise unterschiedlichen Ul-Kennlinien, von dem mindestens einem Verbraucher unterschiedliche Mengen an elektrischer Energie bezogen werden und dadurch die SOC, vorzugsweise die Ul-Kennlinien, der Batteriestränge während des Betriebs des mindestens einen Verbrauchers, insbesondere über mehrere Lade-Entlade-Zyklen, aneinander angeglichen werden. Durch das gezielte Beziehen von Energie von Batteriesträngen mit einem hohen SOC entladen sich diese Stränge schneller bzw. entladen sich die Stränge, an denen eine geringe oder keine Last ist, langsamer. Durch diese Entladung der Batteriestränge, von denen elektrische Energie bezogen wird, verändert sich die UI-Kennlinie selbigen Stranges dahingehend, dass sie auf die Kennlinie des Batteriestranges mit dem geringeren SOC zuwandert. Durch das wenigstens nahezu Angleichen des SOC mittels der Ul-Kennlinie kann das nachfolgende Aufladen der Batteriestränge besonders gleichmäßig erfolgen. Durch dieses gleichmäßige Aufladen kann eine Steuerung für das individuelle Aufladen eines jeden Batteriestranges nicht mehr notwendig sein, was eine Vereinfachung der Regelung des Ladeprozesses aller Batteriestränge zur Folge hätte.

Vorzugsweise kann es außerdem vorgesehen sein, dass der SOC eines jeden Batteriestranges von jeweils einem Batteriemanagementsystem (BMS) gemessen wird und die Ul-Kennlinie der Batteriestränge während des Betriebs des mindestens einen Verbrauchers mit dem sich ändernden SOC angepasst wird, insbesondere von den DC-DC-Stellern die Stromabgabe an das Fahrnetz in Abhängigkeit von der vom Verbraucher benötigten elektrischen Energie eingestellt wird. Dadurch, dass von dem BMS fortwährend der SOC eines jeden Batteriestranges gemessen wird, kann dementsprechend auch die UI-Kennlinie des Batteriestranges während des Betriebs, d. h. während des Verbrauchs der elektrischen Energie, angepasst werden. Somit kann zu jedem Zeitpunkt des Betriebs des Antriebssystems ermittelt werden, welche Batteriestränge sich besonders gut eignen, um den mindestens einen Verbraucher mit elektrischer Energie zu versorgen. Dabei werden die Informationen, die von dem Batteriemanagementsystem aufgenommen werden, sowohl an die Regeleinrichtung als auch an die DC-DC-Steller übermittelt.

Außerdem kann es erfindungsgemäß vorgesehen sein, dass beim Erreichen einer Strombegrenzung des Batteriestranges mit dem höheren SOC und der Reduzierung des SOC die Fahrnetzspannung reduziert wird, insbesondere dass die Fahrnetzspannung solange reduziert wird, bis weitere Batteriestränge Ihre Stromabgabe erhöhen. Bevorzugt wird die Fahrnetzspannung durch die Spannung des Batteriestranges mit dem nächstgeringeren SOC bestimmt. Alternativ kann die Fahrnetzspannung des Batteriestranges durch die Spannung mit den geringsten SOC bestimmt werden, sodass sich die Last für diesen hohen Lastfall gleichmäßig auf die Batteriestränge des Fahrnetzes verteilt. Gleichermaßen kann es vorgesehen sein, dass sich die Fahrnetzspannungen mehrerer Fahrnetze angleichen bzw. synchronisiert werden. Durch diese Angleichung der SOC-Niveaus kann eine gleichmäßige Entladung und auch Aufladung aller Batteriestränge erfolgen. Bevorzugt kann es ein weiteres Ausführungsbeispiel der vorliegenden Erfindung vorsehen, dass die Fahrnetzspannung von den DC-DC-Stellern in einem Spannungsbereich, insbesondere zwischen einem SOC von 100 % (beispielsweise 700 V) und 20 % (beispielsweise 650 V), geregelt wird. Vorzugsweise wird die Fahrnetzspannung bzw. die Strangspannung der einzelnen Batteriestränge in einem Bereich geregelt, der sich weitestgehend linear verhält, wodurch die Verbraucher mit einem nahezu konstanten Strom bzw. Spannung versorgt werden. Dieser lineare Bereich ist besonders schonend für alle Verbraucher, da sie mit einer konstanten elektrischen Energie versorgt werden. Darüber hinaus ist keine ständige Anpassung bzw. Regelung von Spannungen notwendig, um die von dem Antriebssystem geforderte Energie zu generieren.

Des Weiteren ist es vorgesehen, dass durch die DC-DC-Steller die Batteriestränge in einen Lademodus versetzt werden, wenn ein vorbestimmtes Spannungsniveau in der Kennlinie durch einen Generator erreicht wird. Das vorbestimmte Spannungsniveau für das Umschalten in den Lademodus kann dabei vorteilhaft über der höchsten Spannung liegen, bei der entladen wird, also der Strangspannung bei vollständigem Aufladen der Batterien, entsprechend 100 % SOC. Sobald es energetisch für das Fahrnetz bzw. für die Batteriestränge günstiger ist, in den Lademodus zu wechseln, werden die entsprechenden Batteriestränge bis zu einem maximalen SOC durch das Antriebssystem aufgeladen. Dieser Moduswechsel kann automatisch durch die BMS und/oder die DC-DC-Steller ausgeführt werden.

Ein Unterseeboot zur Lösung der eingangs genannten Aufgabe weist die Merkmale des Anspruchs 13 auf. Demnach ist es vorgesehen, dass jeder Batteriestrang eine Regeleinrichtung aufweist, die in Abhängigkeit von einem Ladezustand (SOC) eines jeden Batteriestranges festlegt, welche Menge der benötigten elektrischen Energie der Verbraucher von jedem Batteriestrang bezieht, um die SOC der Batteriestränge miteinander zu synchronisieren.

Des Weiteren kann es vorgesehen sein, dass die SOC der Batteriestränge durch jeweils eine BMS bestimmbar sind und in den DC-DC-Stellern für unterschiedliche Lastströme der Batteriestränge lastabhängige Kennlinien und Stromgrenzwerte hinterlegbar sind.

Bevorzugt kann es vorgesehen sein, dass in den DC-DC-Stellern für unterschiedliche Lastströme der Batteriestränge lastabhängige Kennlinien und Stromgrenzwerte hinterlegbar sind, anhand der die Strangspannungen der Batteriestränge in Abhängigkeit von der Last des Antriebssystems von den DC-DC-Stellern einstellbar sind. Durch diese lastabhängige Steuerung lassen sich die einzelnen Batteriestränge individuell und auf das gesamte Antriebssystem abgestimmt effizient entladen und/oder aufladen.

Darüber hinaus kann es vorgesehen sein, dass die Batteriestränge eine Vielzahl von Lithiumionenzellen oder Lithiumionenbatterien aufweisen. Durch Variationen der Anzahl der Lithiumionenzellen oder Lithiumionenbatterien eines jeden Stranges kann die Kapazität bedarfsbedingt bestimmt werden. Es ist jedoch auch denkbar, dass in den Batteriesträngen andere Arten von Batterien verwendet werden.

Ein bevorzugtes Ausführungsbeispiel wird nachfolgend anhand der Zeichnung näher erläutert. In dieser zeigen:
- Fig. 1: einen Ausschnitt eines Antriebssystems mit zwei DC-DC-Stellern,
- Fig. 2: eine SOC-Kennlinie,
- Fig. 3: eine Ul-Kennlinie, und
- Fig. 4: eine Ul-Kennlinie.

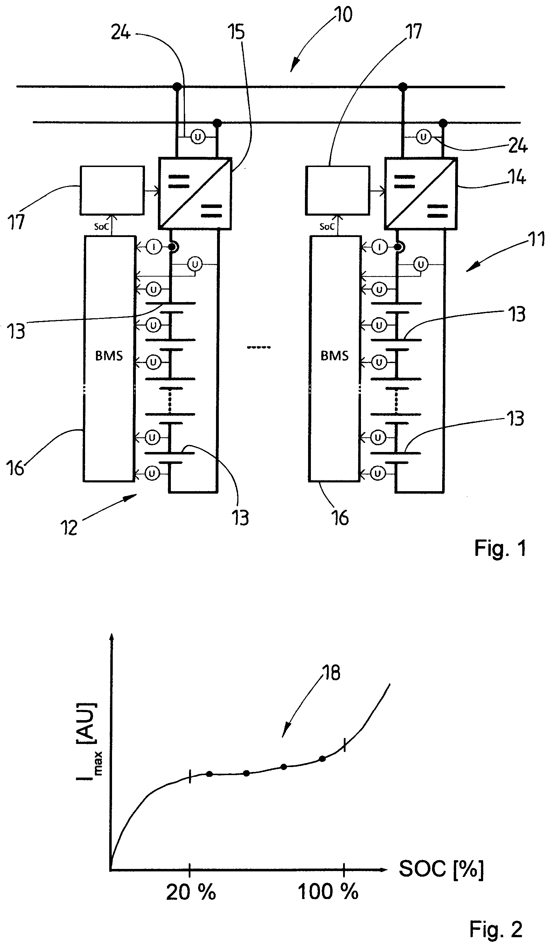

Fig. 1 zeigt einen Ausschnitt eines Fahrnetzes 10 eines Antriebssystems eines Unterseebootes. Diesem Fahrnetz 10 sind zwei parallele Batteriestränge 11, 12 zugeordnet. Jeder dieser Batteriestränge 11, 12 weist eine Vielzahl von in Reihe geschalteter Batteriezellen 13, vorzugsweise Lithiumionenbatterien, auf.

Die einzelnen Batteriestränge 11, 12 sind jeweils durch einen DC-DC-Steller 14, 15 mit dem Fahrnetz 10 gekoppelt. An dieser Stelle soll ausdrücklich darauf hingewiesen werden, dass es erfindungsgemäß auch denkbar ist, dass das Antriebssystem mehr als ein Fahrnetz 10 aufweisen kann, vorzugsweise zwei, denen dann wiederrum mehrere weitere parallele Batteriestränge 11, 12 zugeordnet sind. Üblicherweise weist ein gattungsgemäßes Antriebssystem dreißig bis sechzig Batteriestränge 11, 12 auf, sodass jedem Fahrnetz 10 eine Vielzahl von Batteriesträngen 11, 12 zugeordnet ist.

Gemäß der vorliegenden Erfindung weist jeder Batteriestrang 11, 12 mindestens ein Batteriemanagementsystem (BMS) 16 auf. Dieses BMS 16 ermittelt den Ladezustand (SOC, State Of Charge) eines jeden Batteriestranges 11, 12. Der für jeden Strang 11, 12 ermittelte SOC wird sodann von dem BMS 16 über eine Regeleinrichtung 17 an den entsprechenden DC-DC-Steller 14, 15 übermittelt. Daraufhin wird die Strangspannung eines jeden Batteriestranges 11, 12 von dem DC-DC-Steller 14, 15 in Abhängigkeit von dem SOC eingestellt.

In dem in der Fig. 2 dargestelltem Diagramm ist die maximale Stromstärke Iₘₐₓ eines Batteriestranges 11, 12 in Abhängigkeit von dem SOC der Strangbatterien dargestellt. Die durch den Batteriestrang 11, 12 zur Verfügung gestellte elektrische Energie bzw. elektrische Leistung ist proportional zu der hier dargestellten Stromstärke. Aus der in Fig. 2 dargestellten Kurve 18 wird deutlich, dass die Stromstärke bzw. die Batteriespannung U in einem Bereich von 20 % bis 100 % des SOC nahezu konstant ist. Dieser Bereich zwischen 20 % und 100 % des SOC stellt somit für den Betrieb des Antriebssystems des Unterseebootes einen bevorzugten Betriebsbereich dar. In diesem Bereich verhält sich die durch die einzelnen Batteriestränge 11, 12 zur Verfügung gestellte elektrische Energie relativ konstant.

Durch die Bestimmung der einzelnen SOC eines jeden Batteriestranges 11, 12 durch das BMS 16 können die DC-DC-Steller 14, 15 die Strangspannungen der einzelnen Batteriestränge 11, 12 derart steuern, dass jeder dieser Stränge 11, 12 bevorzugt in diesem linearen Bereich betrieben wird. Wird ein SOC festgestellt, der über dem Wert von 100 % liegt, kann dieser Strang 11, 12 derart angesteuert werden, dass elektrische Energie zunächst von diesem Strang 11, 12 in das Fahrnetz gespeist wird, bis ein entsprechender Wert unter 100 % des SOC erreicht ist. Gleichermaßen wird ein Batteriestrang 11, 12, dessen SOC nahe oder unter 20 % liegt, von dem elektrischen Verbraucher entkoppelt, sodass der Verbraucher von den übrigen Batteriesträngen 11, 12 mit elektrischer Energie versorgt wird.

Über die Zeit soll sich somit in allen Batteriesträngen 11, 12 des Fahrnetzes 10 ein gleicher SOC einstellen. Durch diese Synchronisierung der einzelnen Batteriestränge untereinander können die Stränge 11, 12 besonders effektiv und über einen langen Zeitraum genutzt werden.

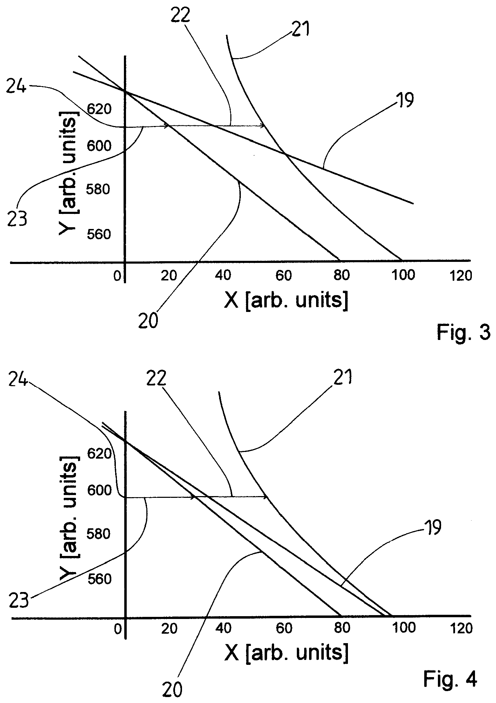

In der Fig. 3 sind beispielshaft zwei Ul-Kennlinien 19, 20 von zwei Batteriesträngen 11, 12 aufgetragen (mit willkürlichen Dimensionen, *arb. units*)*.* Des Weiteren ist die UI-Kennlinie 21 eines Verbrauchers des Fahrnetzes 10 in das Diagramm der Fig. 3 eingetragen. Für den Betrieb des Verbrauchers zieht dieser nun von dem Batteriestrang 11 mit dem höheren SOC (hier dargestellt durch die UI-Kennlinie 19) mehr elektrische Energie bzw. mehr Leistung (dargestellt durch den Pfeil 22) als von dem Batteriestrang 12 mit dem geringeren SOC (hier dargestellt durch die UI-Kennlinie 20 und den Pfeil 23). Dabei werden die Regeleinrichtungen 17 der Batteriestränge 11, 12 derart die DC-DC-Steller 14, 15 in Abhängigkeit der SOC ansteuern, dass die Fahrnetzspannung 24 an beiden Batteriesträngen 11, 12 im Wesentlichen gleich ist. Die Strangspannungen können dabei voneinander abweichen.

Dadurch, dass bei dem in der Fig. 3 dargestelltem Ausführungsbeispiel von dem Batteriestrang 11 mit dem höheren SOC (siehe Kennlinie 19) mehr Energie bzw. Leistung bezogen wird, als von dem Batteriestrang 12 mit dem geringeren SOC (siehe Kennlinie 20), nimmt der SOC des Batteriestranges 11 schneller ab als der des Batteriestranges 12. Das führt dazu, dass sich die Steigung der Ul-Kennlinie 19 der Steigung der Ul-Kennlinie 20 annähert. Diese Annäherung der Kennlinien 19, 20 bedeutet, dass sich auch die SOC-Werte der Batteriestränge 11, 12 annähern bis sie wenigstens nahezu gleich sind.

Ein derartiges Annähern der in Fig. 3 dargestellten Kennlinien 19, 20 ist in der Fig. 4 dargestellt (mit willkürlichen Dimensionen, *arb. units*)*.* In der Fig. 4 ist außerdem ersichtlich, dass durch die Annäherung der beiden Kennlinien 19, 20 die Mengen an elektrischer Energie, die von den beiden Strängen 11, 12 bezogen werden (dargestellt durch die Pfeile 22, 23), sich annähern. Das Laden erfolgt sinngemäß wie das Entladen und im Vergleich zum Laden durch ein Vorzeichen der Strangströme (22, 23) gekennzeichnet.

Sobald der SOC-Wert der Batteriestränge 11, 12 einen vorbestimmbaren Wert unterschreitet, dienen diese Stränge 11, 12 nicht mehr der Energieversorgung des Verbrauchers, bzw. nur in bestimmten Fällen. Beim erneuten Aufladen dieser Batteriestränge 11, 12 und Entladen wiederholt sich das eben beschriebene Verfahren, sodass für alle weiteren Lade-Entlade-Zyklen die SOC-Werte der Stränge 11, 12 wenigstens nahezu identisch sind. Dies wirkt sich sowohl auf die Effizienz der Batteriestränge 11, 12 sowie auf deren Lebensdauer aus.

Es sei an dieser Stelle ausdrücklich darauf hingewiesen, dass das in den Fig. 3 und 4 dargestellte Verfahren sich nicht auf zwei Batteriestränge 11, 12 beschränkt, sondern vielmehr auf die Gesamtheit aller Batteriestränge 11, 12 des Fahrnetzes 10 anwendbar ist.

### Bezugszeichenliste:

- 10: Fahrnetz
- 11: Batteriestrang
- 12: Batteriestrang
- 13: Batteriezellen
- 14: DC-DC-Steller
- 15: DC-DC-Steller
- 16: BMS
- 17: Regeleinrichtung
- 18: Kurve
- 19: Ul-Kennlinie
- 20: Ul-Kennlinie
- 21: Ul-Kennlinie
- 22: Pfeil
- 23: Pfeil
- 24: Strangspannung

## Patentansprüche

1. Verfahren zum Betreiben eines Antriebssystems eines Unterseebootes mit mindestens einem elektrischen Fahrnetz (10) zur Versorgung mindestens eines Verbrauchers mit elektrischer Energie, wobei jedem Fahrnetz (10) mindestens zwei parallele Batteriestränge (11, 12) zugeordnet sind, die durch jeweils einen DC-DC-Steller (14, 15) mit dem Fahrnetz (10) gekoppelt werden, wobei die für den Betrieb des mindestens einen Verbrauchers notwendige elektrische Energie in Abhängigkeit von jeweiligen Ladezuständen, SOC, der mindestens zwei Batteriestränge (11, 12) von den Batteriesträngen (11, 12) vom Verbraucher bezogen wird, um die SOC der Batteriestränge (11, 12) miteinander zu synchronisieren, wobei der Verbraucher seine elektrische Energie oder die erforderliche elektrische Leistung von genau den Batteriesträngen zieht, die in Summe geradeeben diese erforderliche Energie beziehungsweise Leistung zur Verfügung stellen können, ohne eine Tiefenentladung zu erfahren, wobei von einem Batteriestrang (11, 12) mit einem höheren SOC mehr elektrische Energie bezogen wird, als von einem Batteriestrang (11, 12) mit einem geringeren SOC, wobei Strangspannungen (24) der einzelnen Batteriestränge (11, 12) auf einem ähnlichen oder auf einem gleichen Niveau gehalten werden, **dadurch gekennzeichnet, dass** von einer jeweiligen Regeleinrichtung (17) der Batteriestränge (11, 12) eine Ul-Kennlinie (19, 20) für den jeweiligen Batteriestrang (11, 12) in Abhängigkeit vom SOC des jeweiligen Batteriestranges (11, 12) vorgegeben wird, um durch die UI-Kennlinie vorzugeben, welche elektrische Energie bzw. Leistung von dem jeweiligen Batteriestrang in das Fahrnetz gespeist werden kann, wobei die Ul-Kennlinien durch die Regeleinrichtungen der Batteriestränge derart festgelegt werden, dass die Strangspannungen der an der Energieversorgung beteiligten Batteriestränge wenigstens in einem ähnlichen Bereich liegen.

2. Verfahren nach Anspruch 1, **dadurch gekennzeichnet, dass** von Batteriesträngen (11, 12) mit unterschiedlichem SOC, von dem mindestens einen Verbraucher unterschiedliche Mengen an elektrischer Energie bezogen werden und dadurch die SOC der Batteriestränge (11, 12) während des Betriebs des mindestens einen Verbrauchers über mehrere Lade-Entlade-Zyklen aneinander angeglichen werden.

3. Verfahren nach Anspruch 2, **dadurch gekennzeichnet, dass** von Batteriesträngen (11, 12) mit unterschiedlichen Ul-Kennlinien (19, 20) von dem mindestens einen Verbraucher unterschiedliche Mengen an elektrischer Energie bezogen werden und dadurch die Ul-Kennlinien (19, 20) der Batteriestränge (11, 12) während des Betriebs des mindestens einen Verbrauchers über mehrere Lade-Entlade-Zyklen aneinander angeglichen werden.

4. Verfahren nach einem der vorhergehenden Ansprüche, **dadurch gekennzeichnet, dass** der SOC eines jeden Batteriestranges (11, 12) von jeweils einem Batterie-Management-System (BMS) (16) gemessen wird und die Ul-Kennlinien (19, 20) der Batteriestränge (11, 12) während des Betriebs des mindestens einen Verbrauchers mit dem sich ändernden SOC angepasst werden.

5. Verfahren nach Anspruch 4, **dadurch gekennzeichnet, dass** von den DC-DC-Stellern (14, 15) die Stromabgabe an das Fahrnetz (10) in Abhängigkeit von der vom Verbraucher benötigten elektrischen Energie eingestellt wird.

6. Verfahren nach einem der vorhergehenden Ansprüche, **dadurch gekennzeichnet, dass** beim Erreichen einer Strombegrenzung des Batteriestranges (11, 12) mit dem höheren SOC eine Fahrnetzspannung reduziert wird.

7. Verfahren nach einem Anspruch 6, **dadurch gekennzeichnet, dass** die Fahrnetzspannung solange reduziert wird, bis weitere Batteriestränge (11, 12) ihre Stromabgabe erhöhen.

8. Verfahren nach Anspruch 6 oder 7, **dadurch gekennzeichnet, dass** die Fahrnetzspannung der Batteriestränge (11, 12) soweit reduziert wird, dass die Strangspannung (24) des Batteriestranges (11, 12) mit dem nächst geringeren oder dem geringsten SOC abgeregelt wird, sodass sich die Last gleichmäßig auf die Batteriestränge (11, 12) des Fahrnetzes (10) verteilt.

9. Verfahren nach einem der vorherigen Ansprüche, **dadurch gekennzeichnet, dass** die Strangspannungen (24) von den jeweiligen DC-DC-Stellern (14, 15) innerhalb eines bestimmten Spannungsbereichs von bspw. 700 V und bspw. 650 V geregelt werden.

10. Verfahren nach Anspruch 9, **dadurch gekennzeichnet, dass** die Strangspannungen (24) von den jeweiligen DC-DC-Stellern innerhalb eines SOC-Bereichs von 100 % und 20 % geregelt werden.

11. Verfahren nach einem der vorherigen Ansprüche, **dadurch gekennzeichnet, dass** durch die DC-DC-Steller (14, 15) die Batteriestränge (11, 12) in einen Lademodus versetzen werden, wenn ein vorbestimmtes Spannungsniveau in der Kennlinie durch einen Generator erreicht wird und die Batteriestränge (11, 12) in Abhängigkeit ihres SOC aufgeladen werden.

12. Verfahren nach Anspruch 11, **dadurch gekennzeichnet, dass** die Batteriestränge (11, 12) in Abhängigkeit der Ul-Kennlinie (19, 20) aufgeladen werden.

13. Unterseeboot mit einem Fahrnetz (10) und mindestens einem Verbraucher, der durch das Fahrnetz (10) mit elektrischer Energie versorgbar ist, wobei dem Fahrnetz (10) mindestens zwei parallel geschaltete Batteriestränge (11, 12) zugeordnet sind, jedem Batteriestrang (11, 12) mindestens ein Batterie-Management-System (16) zugeordnet ist und die Batteriestränge (11, 12) jeweils durch einen DC-DC-Steller (14, 15) mit dem Fahrnetz (10) gekoppelt sind, wobei jeder Batteriestrang (11, 12) jeweils eine Regeleinrichtung (17) aufweist, die dazu ausgelegt ist, in Abhängigkeit von einem Ladezustand, SOC, des jeweiligen Batteriestranges (11, 12) festzulegen, welche Menge der benötigten elektrischen Energie oder Leistung der Verbraucher von genau den Batteriesträngen (11, 12) bezieht, die in Summe geradeeben diese erforderliche Energie beziehungsweise Leistung zur Verfügung stellen können, ohne eine Tiefenentladung zu erfahren, um die SOC der Batteriestränge (11, 12) miteinander zu synchronisieren, **dadurch gekennzeichnet, dass** die jeweiligen Regeleinrichtungen (17) dazu ausgebildet sind, jeweils eine Ul-Kennlinie (19, 20) für den jeweiligen Batteriestrang (11, 12) in Abhängigkeit vom SOC des jeweiligen Batteriestranges (11, 12) vorzugeben, um durch die UI-Kennlinie vorzugeben, welche elektrische Energie bzw. Leistung von dem jeweiligen Batteriestrang in das Fahrnetz gespeist werden kann, wobei die Regeleinrichtungen so ausgelegt sind, dass die Ul-Kennlinien durch die Regeleinrichtungen der Batteriestränge derart festgelegt werden, dass Strangspannungen der an der Energieversorgung beteiligten Batteriestränge wenigstens in einem ähnlichen Bereich liegen.

## Claims

1. A method for operating a propulsion system of a submarine comprising at least one electrical propulsion network (10) for supplying electrical energy to at least one load, wherein each propulsion network (10) is associated with at least two parallel battery strings (11, 12), each of which is coupled to the propulsion network (10) via a DC-DC converter (14, 15) to the propulsion network (10), wherein the electrical energy required for the operation of the at least one load is derived from the at least two battery strings (11, 12) in accordance with their respective states of charge, SOC, of the at least two battery strings (11, 12) is drawn from the battery strings (11, 12) by the load in order to synchronise the SOC of the battery strings (11, 12) with one another, whereby the load draws its electrical energy or the required electrical power precisely from those battery strings which, in total, are just able to provide this required energy or power, without undergoing deep discharge, whereby more electrical energy is drawn from a battery string (11, 12) with a higher SOC than from a battery string (11, 12) with a lower SOC, and whereby the string voltages (24) of the individual battery strings (11, 12) are maintained at a similar or identical level, **characterised in that** a respective control device (17) for the battery strings (11, 12) specifies a UI characteristic curve (19, 20) for the respective battery string (11, 12) as a function of the SOC of the respective battery string (11, 12), in order to specify, via the UI characteristic curve, what electrical energy or power can be fed from the respective battery string into the traction network, whereby the UI characteristic curves are determined by the control devices of the battery strings in such a way that the string voltages of the battery strings involved in the power supply lie at least within a similar range.

2. A method according to claim 1, **characterised in that** different amounts of electrical energy are drawn by at least one load from battery strings (11, 12) with different SOCs, thereby bringing the SOCs of the battery strings (11, 12) into alignment with one another over several charge-discharge cycles whilst the at least one load is in operation.

3. The method according to claim 2, **characterised in that** different amounts of electrical energy are drawn by the at least one consumer from battery strings (11, 12) with different UI characteristics (19, 20), thereby bringing the UI characteristics (19, 20) of the battery strings (11, 12) are matched to one another during the operation of the at least one load over several charge-discharge cycles.

4. A method according to one of the preceding claims, **characterised in that** the SOC of each battery string (11, 12) is measured by a respective battery management system (BMS) (16) and the UI characteristic curves (19, 20) of the battery strings (11, 12) are adjusted during operation of the at least one load in line with the changing SOC.

5. A method according to claim 4, **characterised in that** the DC-DC converters (14, 15) adjust the current output to the vehicle electrical system (10) depending on the electrical energy required by the load.

6. A method according to one of the preceding claims, **characterised in that**, upon reaching a current limit of the battery string (11, 12) with the higher SOC, the traction system voltage is reduced.

7. A method according to claim 6, **characterised in that** the traction network voltage is reduced until further battery strings (11, 12) increase their current output.

8. A method according to claim 6 or 7, **characterised in that** the traction network voltage of the battery strings (11, 12) is reduced to such an extent that the string voltage (24) of the battery string (11, 12) with the next lowest or the lowest SOC is regulated, so that the load is distributed evenly across the battery strings (11, 12) of the traction network (10).

9. A method according to one of the preceding claims, **characterised in that** the string voltages (24) are regulated by the respective DC-DC controllers (14, 15) within a specific voltage range of, for example, 700 V and, for example, 650 V.

10. A method according to claim 9, **characterised in that** the string voltages (24) are regulated by the respective DC-DC converters within a SOC range of 100 per cent and 20 per cent.

11. A method according to any one of the preceding claims, **characterised in that** the DC-DC converters (14, 15) place the battery strings (11, 12) into a charging mode when a predetermined voltage level on the characteristic curve is reached by a generator, and the battery strings (11, 12) are charged as a function of their SOC.

12. A method according to claim 11, **characterised in that** the battery strings (11, 12) are charged in accordance with the UI characteristic curve (19, 20).

13. A submarine comprising a propulsion network (10) and at least one load which can be supplied with electrical energy by the propulsion network (10), wherein at least two battery strings (11, 12) are assigned to the propulsion network (10), at least one battery management system (16) is assigned to each battery string (11, 12), and the battery strings (11, 12) are each coupled to the propulsion network (10) via a DC-DC converter (14, 15) to the vehicle electrical system (10), wherein each battery string (11, 12) comprises a control device (17) which is designed to determine, depending on a state of charge, SOC, of the respective battery string (11, 12), to determine the amount of electrical energy or power required by the loads from precisely those battery strings (11, 12) which, in total, can provide exactly this required energy or power without undergoing deep discharge, in order to synchronise the SOC of the battery strings (11, 12) with one another**, characterised in that** the respective control devices (17) are configured to each define a UI characteristic curve (19, 20) for the battery string (11, 12) as a function of the SOC of the respective battery string (11, 12), in order to specify, via the UI characteristic curve, what electrical energy or power can be fed from the respective battery string into the vehicle's electrical system, wherein the control devices are designed such that the UI characteristic curves are determined by the control devices of the battery strings in such a way that the string voltages of the battery strings involved in the power supply lie at least within a similar range.

## Revendications

1. Procédé d'exploitation d'un système de propulsion d'un sous-marin comprenant au moins un réseau de propulsion électrique (10) destiné à alimenter au moins un consommateur en énergie électrique, dans lequel à chaque réseau de propulsion (10) sont associés au moins deux circuits de batteries parallèles (11, 12) qui sont couplés au réseau de propulsion (10) par l'intermédiaire d'un régulateur CC-CC (14, 15) au réseau de propulsion (10), l'énergie électrique nécessaire au fonctionnement dudit au moins un consommateur étant prélevée, en fonction des états de charge respectifs, SOC, des au moins deux chaînes de batteries (11, 12) est fournie au consommateur par les chaînes de batteries (11, 12) afin de synchroniser entre elles les SOC des chaînes de batteries (11, 12), le consommateur prélevant son énergie électrique ou la puissance électrique requise précisément des chaînes de batteries qui, ensemble, sont en mesure de fournir exactement cette énergie ou cette puissance requise, sans subir de décharge profonde, l'énergie électrique prélevée sur un banc de batteries (11, 12) présentant un SOC plus élevé étant supérieure à celle prélevée sur un banc de batteries (11, 12) présentant un SOC plus faible, les tensions de banc (24) des différents bancs de batteries (11, 12) étant maintenues à un niveau similaire ou identique, **caractérisé en ce qu'**une courbe caractéristique UI (19, 20) est prédéfinie par un dispositif de régulation respectif (17) des trains de batteries (11, 12) pour le train de batteries concerné (11, 12) en fonction du SOC de ce train de batteries (11, 12), afin de définir, par le biais de cette courbe caractéristique UI, quelle énergie électrique ou quelle puissance peut être injectée par le banc de batteries concerné dans le réseau routier, les courbes caractéristiques UI étant définies par les dispositifs de régulation des bancs de batteries de telle sorte que les tensions des bancs de batteries participant à l'alimentation en énergie se situent au moins dans une plage similaire.

2. Procédé selon la revendication 1, **caractérisé en ce que** des quantités différentes d'énergie électrique sont prélevées par au moins un consommateur à partir de chaînes de batteries (11, 12) présentant des SOC différents, ce qui permet d'harmoniser les SOC des chaînes de batteries (11, 12) les uns par rapport aux autres pendant le fonctionnement dudit au moins un consommateur, sur plusieurs cycles de charge-décharge.

3. Procédé selon la revendication 2, **caractérisé en ce que** des quantités différentes d'énergie électrique sont prélevées par ledit au moins un consommateur à partir de branches de batterie (11, 12) présentant des courbes UI (19, 20) différentes, ce qui permet d'harmoniser les courbes UI (19, 20) des branches de batterie (11, 12) sont harmonisées les unes par rapport aux autres pendant le fonctionnement dudit au moins un consommateur, sur plusieurs cycles de charge-décharge.

4. Procédé selon l'une des revendications précédentes, **caractérisé en ce que** le SOC de chaque train de batteries (11, 12) est mesuré respectivement par un système de gestion de batterie (BMS) (16) et que les courbes caractéristiques UI (19, 20) des trains de batteries (11, 12) sont adaptées au SOC variable pendant le fonctionnement dudit au moins un consommateur.

5. Procédé selon la revendication 4, **caractérisé en ce que** les régulateurs CC-CC (14, 15) règlent le courant fourni au réseau de bord (10) en fonction de l'énergie électrique requise par le consommateur.

6. Procédé selon l'une des revendications précédentes, **caractérisé en ce que**, lorsqu'une limite de courant est atteinte sur le circuit de batterie (11, 12) présentant le SOC le plus élevé, la tension du réseau de bord est réduite.

7. Procédé selon la revendication 6, **caractérisé en ce que** la tension du réseau de traction est réduite jusqu'à ce que d'autres chaînes de batteries (11, 12) augmentent leur débit de courant.

8. Procédé selon la revendication 6 ou 7, **caractérisé en ce que** la tension du réseau de traction des chaînes de batteries (11, 12) est réduite de manière à ce que la tension de chaîne (24) de la chaîne de batteries (11, 12) présentant le SOC immédiatement inférieur ou le plus faible soit régulée, de sorte que la charge soit répartie uniformément entre les chaînes de batteries (11, 12) du réseau de bord (10).

9. Procédé selon l'une des revendications précédentes, **caractérisé en ce que** les tensions de chaîne (24) sont régulées par les convertisseurs CC-CC respectifs (14, 15) dans une plage de tension déterminée comprise, par exemple, entre 700 V et 650 V.

10. Procédé selon la revendication 9, **caractérisé en ce que** les tensions de phase (24) sont régulées par les régulateurs CC-CC respectifs dans une plage de SOC comprise entre 100 % et 20 %.

11. Procédé selon l'une des revendications précédentes, **caractérisé en ce que** les régulateurs CC-CC (14, 15) placent les branches de batterie (11, 12) en mode de charge lorsqu'un niveau de tension prédéterminé dans la courbe caractéristique est atteint par un générateur, et les branches de batterie (11, 12) sont chargées en fonction de leur SOC.

12. Procédé selon la revendication 11, **caractérisé en ce que** les batteries (11, 12) sont chargées en fonction de la courbe caractéristique UI (19, 20).

13. Sous-marin comportant un réseau de propulsion (10) et au moins un consommateur pouvant être alimenté en énergie électrique par le réseau de propulsion (10), dans lequel au moins deux chaînes de batteries montées en parallèle (11, 12) sont associés au réseau de propulsion (10), au moins un système de gestion de batterie (16) est associé à chaque chaîne de batteries (11, 12) et les chaînes de batteries (11, 12) sont chacune couplées au réseau de propulsion (10) par un convertisseur CC-CC (14, 15) au réseau de bord (10), chaque chaîne de batteries (11, 12) comportant un dispositif de régulation (17) conçu pour déterminer, en fonction d'un état de charge, SOC, de la batterie correspondante (11, 12), la quantité d'énergie électrique ou de puissance requise que les consommateurs prélèvent précisément sur les batteries (11, 12) qui, ensemble, sont en mesure de fournir exactement cette énergie ou cette puissance nécessaire sans subir de décharge profonde, afin de synchroniser entre elles les batteries (11, 12) les uns par rapport aux autres, **caractérisé en ce que** les dispositifs de régulation respectifs (17) sont conçus pour définir chacun une courbe caractéristique UI (19, 20) pour le bloc de batteries (11, 12) en fonction du SOC du bloc de batteries concerné (11, 12), afin de définir, par le biais de la courbe caractéristique UI, quelle énergie électrique ou quelle puissance peut être injectée dans le réseau de circulation par le bloc de batteries concerné, les dispositifs de régulation étant conçus de telle sorte que les courbes caractéristiques UI soient déterminées par les dispositifs de régulation des blocs de batteries de manière à ce que les tensions des blocs de batteries participant à l'alimentation en énergie se situent au moins dans une plage similaire.
